# EUROPEAN PATENT SPECIFICATION

(11) **EP 4 276 144 B1**
(45) Date of publication and mention of the grant of the patent: **26.08.2026**
(21) Application number: 22736763.8
(22) Date of filing: 06.01.2022
(51) Int. Cl.: C08K 5/14, C08L 27/12, C09K 3/10, C08F 214/22

(54) **FLUORORUBBER COMPOSITION AND SEAL MEMBER**
FLUORKAUTSCHUKZUSAMMENSETZUNG UND DICHTUNGSELEMENT
COMPOSITION DE CAOUTCHOUC FLUORÉ ET ÉLÉMENT D'ÉTANCHÉITÉ

(30) Priority: 07.01.2021 JP 2021001654
(43) Date of publication of application: 15.11.2023
(73) Proprietor: NOK Corporation, Minato-ku Tokyo 105-8585 (JP)
(72) Inventor: SHIMAMURA, Takuto, Kanagawa 251-0042 (JP)
(74) Representative: TBK
(86) International application number: PCT/JP2022/000222
(87) International publication number: WO 2022/149595

(56) References cited:
- WO-A1-2020/116394
- JP-A- 2000 313 999
- JP-A- 2004 288 848
- JP-A- 2006 083 297
- JP-A- 2007 119 522
- JP-A- 2010 242 108
- JP-A- 2019 026 723
- UNKNOWN: "Tecnoflon VPL FKM A Unique Combination of Very Low Temperature and High Chemical Resistance", 31 December 2013 (2013-12-31), pages 1 - 2, XP093275672, Retrieved from the Internet <URL:https://www.solvay.com/sites/g/files/srpend221/files/2018-10/Tecnoflon-VPL-FKM_EN-v2.0_0.pdf>

## Description

### Technical Field

The present invention relates to a fluororubber composition and a sealing material.

### Background Art

Fluororubber compositions are materials excellent in oil resistance and heat resistance, and are thus used in a wide range of applications, including sealing materials for automobiles. On the other hand, fuel oil resistance as well as cold temperature (low temperature) resistance are also needed for, for example, a system in which fuel oil is directly injected, such as injectors, since a high pressure condition has been promoted recently from an environmental viewpoint.

Generally, as for the cold temperature resistance of fluororubbers, a binary or ternary fluororubber in accordance with the ASTM standard has a cold temperature resistance of about -18°C. A ternary fluororubber obtained by copolymerizing with perfluoro vinyl ether instead of hexafluoropropylene is commercially available as a ternary fluororubber having improved cold temperature resistance. However, when perfluoro(methyl vinyl ether) is used as the perfluoro vinyl ether, the limit of the cold temperature resistance of the resulting ternary fluororubber is about -30°C.

On the other hand, cold temperature resistance greater than -30°C is needed for materials for a system in which fuel is directly injected. **In** order to provide such a material by using fluororubber, it is necessary in copolymerization to replace the perfluoro vinyl ether moiety, which can develop the cold temperature resistance, with a monomer unit that has a lower glass transition temperature than perfluoro(methyl vinyl ether).

Patent Literature 1 discloses that a cold temperature resistance of -30°C or less can be achieved by using a fluoroelastomer composition containing, as a rubber component, a fluororubber containing vinylidene fluoride/tetrafluoroethylene/perfluoro(methyl vinyl ether) as the main chain. However, even when such a fluoroelastomer composition is used, the great fuel oil resistance that has been desired recently cannot be achieved, and it is thus difficult to achieve both the cold temperature resistance and the fuel oil resistance at the same time. Patent Literature 2 discloses sealing materials that are both fuel oil and low temperature resistant. These materials that are obtained by crosslinking polymer blends that comprise two different fluororubbers.

A grade of a fluororubber that includes perfluoroalkoxy vinyl ether introduced as the perfluoro vinyl ether moiety is commercially available from Solvay, and it is known that a fluororubber of such a grade exhibits a super cold temperature resistance of -35°C or less. However, the lineup of the grade of the fluororubbers exhibiting such a super cold temperature resistance is extremely small, and in addition, when a fluororubber of this grade is merely used, for example, to obtain a super cold temperature resistance, it is difficult to achieve the targeted great fuel oil resistance. Also, when fluororubbers of the grade exhibiting a super cold temperature resistance of -35°C or less is synthesized, it is necessary to use perfluoro vinyl ether that has a greater cold temperature resistance or to increase the ratio of the perfluoro vinyl ether in the formulation, and accordingly, there is a concern that the production cost of the fluororubber is significantly increased with the improvement in the cold temperature resistance.

Furthermore, in addition to hydrocarbon fuels generally used such as gasoline, oxygen-containing fuels such as ethers and alcohols have also been used as fuel oils for automobiles recently in view of, for example, combustion efficiency and environmental protection, and great fuel oil resistance and alcohol resistance are also required of the fluororubber composition. Thus, there is a need for developing a fluororubber composition that gives a vulcanized product exhibiting great cold temperature resistance as well as excellent fuel oil resistance and alcohol resistance.

### Document List

### Patent Literature

Patent Literature 1: Japanese Patent Application Laid-Open No. 2005-53955
Patent Literature 2: JP 2019-026723 A

### Summary of Invention

### Technical Problem

The present invention provides a fluororubber composition that gives a vulcanized product exhibiting great cold temperature resistance as well as excellent fuel oil resistance and alcohol resistance.

### Solution to Problem

The fluororubber composition of an aspect of the present invention includes at least two peroxide-crosslinkable fluorine-containing elastomers each containing a structural unit of perfluoroalkoxy vinyl ether.
In the present invention, a vulcanized product obtained by vulcanizing and shaping the fluororubber composition has a glass transition temperature (Tg) of -31°C to -39°C.

In an embodiment of the present invention, a peak shape of the glass transition temperature (Tg) is single.

In an embodiment of the present invention, the fluororubber composition includes 10 parts by weight or more and 100 parts by weight or less of a filler; 0.2 parts by weight or more and 5.0 parts by weight or less of an organic peroxide as a crosslinking agent; and 0.2 parts by weight or more and 5.0 parts by weight or less of a co-crosslinking agent, per 100 parts by weight of the peroxide-crosslinkable fluorine-containing elastomers.

In an embodiment of the present invention, a vulcanized product obtained by vulcanizing and shaping the fluororubber composition shows a swollen volume percentage of less than 25% after immersing the vulcanized product in a mixed oil at 70°C for 168 hours, wherein the mixed oil has a volume ratio of a fuel oil (fuel oil C in accordance with the standard of JIS K6258:2016): methanol of 80:20; and the vulcanized product shows a swollen volume percentage of less than 15% after immersing the vulcanized product in methanol at 70°C for 168 hours.

The sealing material of an aspect of the present invention is obtained by vulcanizing and shaping the fluororubber composition.

In an embodiment of the present invention, the sealing material is an O-ring.

### Effects of Invention

According to the present invention, there can be provided a fluororubber composition that gives a vulcanized product exhibiting great cold temperature resistance as well as excellent fuel oil resistance and alcohol resistance.

### Description of Embodiments

Hereinafter, embodiments of the present invention will be described. The fluororubber composition according to the present invention includes at least two peroxide-crosslinkable fluorine-containing elastomers each containing a structural unit of perfluoroalkoxy vinyl ether. **In** the fluororubber composition according to the present embodiment, two or more such fluorine-containing elastomers are blended, so that a vulcanized product to be obtained can have excellent fuel oil resistance that cannot be achieved by a fluororubber composition including a single conventional fluororubber of a grade that exhibits a super cold temperature resistance of -35°C or less, and can also have improved alcohol resistance. Each of components constituting the fluororubber composition according to the present embodiment will be described in detail below.

### <Peroxide-crosslinkable fluorine-containing elastomer>

In the present embodiment, the fluororubber composition includes at least two peroxide-crosslinkable fluorine-containing elastomers as the main component for forming a vulcanized product, and each of the fluorine-containing elastomers contains at least one structural unit of perfluoroalkoxy vinyl ether (hereinafter, also referred to as "MOVE"). That is, in the fluororubber composition, two or more fluorine-containing elastomers each containing a structural unit of MOVE are blended. The peroxide-crosslinkable fluorine-containing elastomer is a main ingredient for fabricating a shaped fluororubber material, and it may be a homopolymer obtained by polymerizing MOVE alone as a fluorine-containing monomer or may be a copolymer obtained by copolymerizing MOVE with another fluorine-containing monomer (hereinafter, these are also collectively referred to as "fluororubber polymer").

The perfluoroalkoxy vinyl ether is represented by a chemical formula: CFX=CXOCF₂OR_{f}. In the formula, X each independently represents F or H, and preferably F. R_{f} is any group selected from a linear or branched C₁-C₆ perfluoroalkyl group; a C₅-C₆ cyclic (per)fluoroalkyl group; and a linear or branched C₂-C₆ perfluorooxyalkyl group containing one to three caternary oxygen atoms. R_{f} is preferably -CF₂CF₃ (MOVE1); -CF₂CF₂OCF₃ (MOVE2); or - CF₃ (MOVE3).

For the case where the fluorine-containing elastomer is a copolymer, examples of the other fluorine-containing monomer include tetrafluoroethylene, hexafluoropropylene, perfluoroalkyl vinyl ether, vinyl fluoride, and vinylidene fluoride. Examples of the copolymer include vinylidene fluoride (VdF)/ tetrafluoroethylene (TFE)/ perfluoroalkoxy vinyl ether (MOVE) copolymer, and vinylidene fluoride (VdF)/ tetrafluoroethylene (TFE)/ perfluoro(methyl vinyl ether) (PMVE)/ perfluoroalkoxy vinyl ether (MOVE) copolymer.

The content of the MOVE component included in the fluorine-containing elastomer is preferably 1 mol% or more and 99 mol% or less, and more preferably 2 mol% or more and 98 mol% or less. When the content of the MOVE component is within the range of 1 mol% or more and 99 mol% or less, the physical properties including excellent cold temperature resistance and fuel oil resistance can be ensured.

The fluororubber polymer may contain an iodine group and/or a bromine group as a crosslinkable point in its molecule. The introduction of the iodine group and/or the bromine group, which enables the peroxide-crosslinking, into the fluororubber can be achieved by a copolymerization reaction in the presence of an iodine group and/or bromine group-containing saturated or unsaturated compound. For the case where an iodine group and/or a bromine group is introduced into the side chain of the fluororubber polymer, examples include monomers for forming a crosslinkable point such as perfluoro(2-bromoethyl vinyl ether), 3,3,4,4-tetrafluoro-4-bromo-1-butene, 2-bromo-1,1-difluoroethylene, bromotrifluoroethylene, perfluoro(2-iodoethyl vinyl ether), and iodotrifluoroethylene.

In the case where an iodine group and/or a bromine group is introduced into the terminal of the fluororubber polymer, a fluoroalkylene compound halogenated at both terminals represented by the chemical formula: Y¹CₙF₂ₙY² is used, wherein Y¹ is F, Br or **I,** Y² is Br or **I,** and n is an integer of 1 to 12. As such a fluoroalkylene compound halogenated at both terminals, a compound in which n is an integer of 1 to 6 is preferable in view of the balance between the reactivity and ease of handle, and a fluororubber polymer containing an iodine group and/or a bromine group derived from 1-bromoperfluoroethane, 1-bromoperfluoropropane, 1-bromoperfluorobutane, 1-bromoperfluoropentane, 1-bromoperfluorohexane, 1-iodoperfluoroethane, 1-iodoperfluoropropane, 1-iodoperfluorobutane, 1-iodoperfluoropentane, or 1-iodoperfluorohexane can be used, for example.

I and/or Br as Y¹ and Y² enables introduction of a crosslinkable point into the terminal of the fluororubber polymer. Examples of such a compound to be used include 1-bromo-2-iodotetrafluoroethane, 1-bromo-3-iodoperfluoropropane, 1-bromo-4-iodoperfluorobutane, 2-bromo-3-iodoperfluorobutane, monobromomonoiodoperfluoropentane, monobromomonoiodoperfluoro-n-hexane, 1,2-dibromoperfluoroethane, 1,3-dibromoperfluoropropane, 1,4-dibromoperfluorobutane, 1,5-dibromoperfluoropentane, 1,6-dibromoperfluorohexane, 1,2-diiodoperfluoroethane, 1,3-diiodoperfluoropropane, 1,4-diiodoperfluorobutane, 1,5-diiodoperfluoropentane, and 1,6-diiodoperfluorohexane. These compounds can also be used as a chain transfer agent.

Examples of a commercially available product of the fluorine-containing elastomer containing a structural unit of MOVE include the VPL series of Tecnoflon (registered trademark) (VPL85540, VPL55540, VPL45535, VPL85730, VPL45730) available from SOLVAY.

### <Filler>

In the present embodiment, a filler may be further incorporated into the fluororubber composition. When the fluororubber composition includes the filler, a vulcanized product to be obtained can have improved mechanical strengths and resistance to compression set. Examples of the filler include carbon black, silica, talc, clay, and bituminous coal, which are general reinforcing materials added to a fluororubber composition. The filler can be added appropriately so as to obtain desirable physical properties, and particularly, it is preferable to use carbon black, which exhibits an improving effect on the resistance to compression set of the vulcanized product.

Examples of the carbon black include hard carbon, such as Super Abrasion Furnace (SAF) carbon black, Intermediate Super Abrasion Furnace (ISAF) carbon black, High Abrasion Furnace (HAF) carbon black, and Easy Processing Channel (EPC) carbon black; and soft carbon, such as eXtra Conductive Furnace (XCF) carbon black, Fast Extruding Furnace (FEF) carbon black, General Purpose Furnace (GPF) carbon black, High Modulus Furnace (HMF) carbon black, Semi-Reinforcing Furnace (SRF) carbon black, Fine Thermal (FT) carbon black, and Medium Thermal (MT) carbon black. Among these, soft carbon is preferable as the carbon black, and among soft carbon, Medium Thermal carbon black, which has a relatively large particle size, is more preferable. Examples of a commercially available product of the carbon black include Medium Thermal carbon black, such as "THERMAX (registered trademark) N990" available from CANCARB LIMITED.

The fillers may be used singly or in combinations of two or more thereof. The content of the filler included in the fluororubber composition is preferably 10 parts by weight or more and 100 parts by weight or less, and more preferably 20 parts by weight or more and 80 parts by weight or less, per 100 parts by weight of the peroxide-crosslinkable fluorine-containing elastomers.

When the content is 10 parts by weight or more, a vulcanized product to be obtained has favorable mechanical characteristics such as the tensile strength. When the content is 100 parts by weight or less, a vulcanized product to be obtained exhibits favorable elongation at break.

### <Organic peroxide as crosslinking agent>

The organic peroxide as a crosslinking agent is used as a crosslinking agent for forming peroxide-crosslinkages in the fluorine-containing elastomer. Examples of the organic peroxide as a crosslinking agent include dicumyl peroxide, cumene hydroperoxide, p-menthane hydroperoxide, 2,5-dimethylhexane-2,5-dihydroperoxide, di-tert-butyl peroxide, benzoyl peroxide, m-toluyl peroxide, 2,5-dimethyl-2,5-bis(tert-butylperoxy)hexane, 2,5-dimethyl-2,5-bis(tert-butylperoxy)-3-hexyne, 1,3-bis(tert-butylperoxyisopropyl)benzene, 2,5-dimethyl-2,5-di(benzoylperoxy)hexane, 1,1,3,3-tetramethylbutylperoxy-2-ethyl hexanoate, tert-butylperoxybenzoate, tert-butylperoxylaurate, di(tert-butylperoxy)adipate, di(2-ethoxyethylperoxy)dicarbonate, and bis(4-tert-butylcyclohexyl)peroxydicarbonate. Among these, 2,5-dimethyl-2,5-bis(tert-butylperoxy) hexane is preferable.

Examples of a commercially available product of the organic peroxide as a crosslinking agent to be used include "PERHEXA (registered trademark) 25B-40" available from NOF CORPORATION. The organic peroxide as a crosslinking agent may be used singly or in combinations of two or more thereof.

The content of the organic peroxide as a crosslinking agent is preferably 0.2 parts by weight or more and 5 parts by weight or less, and more preferably 0.5 parts by weight or more and 3 parts by weight or less, per 100 parts by weight of the peroxide-crosslinkable fluorine-containing elastomers. When the content is 0.2 parts by weight or more, the fluorine-containing elastomer is sufficiently crosslinked, which results in favorable mechanical properties of a vulcanized product to be obtained. When the content is 5 parts by weight or less, moderate vulcanization proceeds, which results in a vulcanized product exhibiting favorable mechanical characteristics as well as favorable resistance to compression set.

### <Co-crosslinking agent>

For the peroxide-crosslinking with the organic peroxide as a crosslinking agent, a co-crosslinking agent may be used together as a crosslinking aid for the fluorine-containing elastomer. The co-crosslinking agent is preferably a multifunctional unsaturated compound as a co-crosslinking agent. Examples of the co-crosslinking agent include tri(meth)allyl isocyanurate, tri(meth)allyl cyanurate, triallyl trimellitate, N,N'-m-phenylene bismaleimide, diallyl phthalate, tris(diallylamine)-s-triazine, triallyl phosphite, ethylene glycol di(meth)acrylate, diethylene glycol di(meth)acrylate, neopentyl glycol di(meth)acrylate, trimethylolpropane tri(meth)acrylate, and 1,3-butadiene. Among these, tri(meth)allyl isocyanurate is preferable. (Meth)allyl means allyl or methallyl, and similarly, (meth)acrylate means acrylate or methacrylate.

Examples of a commercially available product of the co-crosslinking agent to be used include "TAIC (registered trademark) WH-60" manufactured by Nihon Kasei CO., LTD. The co-crosslinking agents may be used singly or in combinations of two or more thereof.

The content of the co-crosslinking agent is preferably 0.2 parts by weight or more and 5 parts by weight or less, and more preferably 0.3 parts by weight or more and 3 parts by weight or less, per 100 parts by weight of the peroxide-crosslinkable fluorine-containing elastomers. When the content is 0.2 parts by weight or more, the fluorine-containing elastomer can be sufficiently crosslinked and the resulting vulcanized product can thus maintain its physical properties and shape retention. An amount thereof blended of 5 parts by weight or less involves anticipation of improvement in properties including the mechanical properties and heat resistance, and also is economical.

### (Other components)

In addition to the components described above, various additives generally used in rubber processing field may be appropriately blended into the fluororubber composition, if needed. Examples of such additives include a crosslinking accelerator, a photostabilizer, a plasticizer, a processing aid, a lubricant, an anti-aging agent, an adhesive, a lubricating agent, a flame retardant, a fungicide, an antistatic agent, a colorant, a silane coupling agent, and a crosslink retarder. The amount of these additives blended is not particularly limited, and these additives can be blended appropriately into the fluororubber composition in an amount according to the purpose for the blending as long as the object and the effect of the present invention are not obstructed.

### (Method for producing fluororubber composition)

The method for producing the fluororubber composition according to the present embodiment is not particularly limited. For example, the fluororubber composition can be produced by appropriately blending together the components described above, and various additives generally used as compounding ingredients for rubber, if needed, in a predetermined ratio, and then kneading or mixing the components using a closed-type kneading machinery, such as Intermix, Kneader, or Banbury Mixer, or by a means to stir, such as open rolls. Before kneading or mixing, prekneading or premixing may be performed, if necessary.

### (Sealing material)

The fluororubber composition according to the present embodiment can be used as a material for vulcanizing and shaping, to thereby produce a sealing material. For example, a rubber material in the form of a sheet made of the fluororubber composition obtained by the production method described above can be vulcanized and shaped into a given shape by vulcanizing press, to thereby produce a desired sealing material. At that time, vulcanizing and shaping is generally carried out by press-vulcanization at about 100 to 250°C for about 1 to 120 minutes and oven-vulcanization (second vulcanization) at about 150 to 250°C for about 0 to 30 hours. The vulcanized product obtained using the fluororubber composition according to the present embodiment exhibits great cold temperature resistance and is also excellent in fuel oil resistance and alcohol resistance, and accordingly, the vulcanized product is effective for application to sealing materials for automobile parts. Examples of the sealing materials for automobile parts include an O-ring, a gasket, a packing, a valve, and oil seal, and the vulcanized product can be particularly preferably used as an O-ring.

### (Glass transition temperature)

The vulcanized product obtained by vulcanizing and shaping the fluororubber composition according to the present embodiment has a glass transition temperature (Tg) of -31°C to -39°C, and preferably -34°C to -36°C. **In** other words, fluorine-containing elastomers are blended such that the fluororubber composition after vulcanizing and shaping has the predetermined glass transition temperature. When the fluorine-containing elastomers are blended so as to achieve such a glass transition temperature, a vulcanized product to be obtained has great cold temperature resistance. The glass transition temperature is measured using a differential scanning calorimeter (DSC). Preferably, a peak shape of the glass transition temperature as measured using a DSC is single. In the case where a peak shape of the glass transition temperature is single, the cold temperature resistance can be more stable than that in the case where the peak shape of the glass transition temperature is multiple. Moreover, in the case where a plurality of glass transition temperatures are found by a DSC measurement, it is preferable that all the glass transition temperatures obtained should be within the temperature range described above.

### (Cold temperature resistance)

For the vulcanized product obtained by vulcanizing and shaping the fluororubber composition according to the present embodiment, the temperature in TR-10 in accordance with low-temperature retraction (TR test) specified in JIS K6261-4:2017, is preferably -31°C to -39°C, and more preferably -34°C to -36°C. If the temperature in TR-10 is more than -31°C, the vulcanized product has insufficient cold temperature resistance. If the temperature in TR-10 is less than -39°C, the blending ratio of the fluororubber polymer, which has greater cold temperature resistance, is higher, and this leads to a concern for an increase in the production cost and thus is not preferable.

### (Fuel oil resistance)

The vulcanized product obtained by vulcanizing and shaping the fluororubber composition according to the present embodiment preferably shows a swollen volume percentage of less than 25% after immersing the vulcanized product in a mixed oil at 70°C for 168 hours, wherein the mixed oil has a volume ratio of a fuel oil (fuel oil C in accordance with the standard of JIS K6258:2016): methanol of 80:20. Fuel oil C is a fuel oil composed of 2,2,4-trimethylpentane (isooctane): toluene in a volume ratio of 50:50, and is used mainly as a substitute for an oxygen compound-free, petroleum-based fuel oil (gasoline for automobiles). The mixed oil obtained by mixing the fuel oil/ methanol in a volume ratio of 80/20 is selected as a standard fuel oil for evaluation of fuel oil resistance, and the swollen volume percentage is determined in accordance with the standard of JIS K6258:2016.

### (Alcohol resistance)

The vulcanized product obtained by vulcanizing and shaping the fluororubber composition according to the present embodiment preferably shows a swollen volume percentage of less than 15% after immersing the vulcanized product in methanol at 70°C for 168 hours. Methanol is selected as a standard alcohol for evaluation of alcohol resistance, and the swollen volume percentage is determined in accordance with the standard of JIS K6258:2016.

Embodiments of the present invention have been described above; however, the present invention is not limited to the above-described embodiments. The present invention encompasses each and every mode included in the spirit and scope of the present invention, and can be variously modified within the scope of the present invention.

### Examples

The present invention will be described below by way of Examples, but the present invention is not limited to these Examples as long as not deviating from the spirit of the present invention.

### (Example 1)

90 parts by weight of fluororubber polymer A (vinylidene fluoride (VdF)/ tetrafluoroethylene (TFE)/ perfluoro(methyl vinyl ether) (PMVE)/ perfluoroalkoxy vinyl ether (MOVE) copolymer: trade name "Tecnoflon (registered trademark) VPL85540", manufactured by Solvay), 10 parts by weight of fluororubber polymer C (vinylidene fluoride (VdF)/ tetrafluoroethylene (TFE)/ perfluoro(methyl vinyl ether) (PMVE)/ perfluoroalkoxy vinyl ether (MOVE) copolymer: trade name "Tecnoflon (registered trademark) VPL45730", manufactured by Solvay), 30 parts by weight of filler A (medium thermal (MT) carbon black: trade name "THERMAX (registered trademark) N990", manufactured by CANCARB LIMITED), 12 parts by weight of filler B (bituminous coal: trade name "AUSTIN BLACK (registered trademark) 325", manufactured by Coal Fillters Inc.), and 1 part by weight of a co-crosslinking agent (triallyl isocyanurate: trade name "TAIC (registered trademark) WH-60", manufactured by Nihon Kasei CO., LTD.) were kneaded by a kneader, and the resulting product was then transferred to open rolls. 2 parts by weight of an organic peroxide as crosslinking agent (2,5-dimethyl-2,5-bis(tert-butylperoxy)hexane: trade name "PERHEXA (registered trademark) 25B-40", manufactured by NOF CORPORATION) was further added, and the resulting mixture was kneaded to prepare a fluororubber composition. Then, the resulting kneaded product of the fluororubber composition was press-vulcanized at 180°C for 6 minutes, and further vulcanized in an oven at 230°C for 22 hours (secondary vulcanization) to thereby obtain a vulcanized product in the shape of a sheet. The following characteristics of the resulting vulcanized product were determined to evaluate various performances.

### <Glass transition temperature>

The glass transition temperature (Tg) of the resulting vulcanized product was measured using a differential scanning calorimeter (DSC) in accordance with JIS K6240: 2011. Furthermore, the peak shape of the glass transition temperature was observed. The result of the measurement is shown in Table 1.

### <Cold temperature resistance>

On the resulting vulcanized product, low-temperature retraction (TR test) was carried out in accordance with JIS K6261-4:2017 to measure the temperature in TR-10. In light of the balance with the production cost, if the temperature in TR-10 was -31°C to -39°C, the vulcanized product was rated as "Good (circle)", and if the temperature in TR-10 fell outside that range, the vulcanized product was rated as "Poor (cross mark)". The results of the measurement and evaluation are shown in Table 1.

### <Fuel oil resistance>

On the resulting vulcanized product, the swollen volume percentage after immersing it in a mixed oil in a pressure-resistant container (autoclave) at 70°C for 168 hours was determined in accordance with the standard of JIS K6258:2016, wherein the mixed oil had a volume ratio of a fuel oil (fuel oil C): methanol of 80:20. If the swollen volume percentage was less than 25%, the vulcanized product was rated as "Good (circle)", and if the swollen volume percentage fell outside that range, the vulcanized product was rated as "Poor (cross mark)". The results of the measurement and evaluation are shown in Table 1. It should be note that fuel oil C is a fuel oil composed of 2,2,4-trimethylpentane (isooctane): toluene in a volume ratio of 50:50.

### <Alcohol resistance>

On the resulting vulcanized product, the swollen volume percentage after immersing it in methanol in a pressure-resistant container (autoclave) at 70°C for 168 hours was determined in accordance with the standard of JIS K6258:2016. If the swollen volume percentage was less than 15%, the vulcanized product was rated as "Good (circle)", and if the swollen volume percentage fell outside that range, the vulcanized product was rated as "Poor (cross mark)". The results of the measurement and evaluation are shown in Table 1.

### (Example 2)

A fluororubber composition and a vulcanized product thereof were prepared, followed by the measurements and evaluations, in the same manner as in Example 1, except that the amount of fluororubber polymer A added was 50 parts by weight, and that the amount of fluororubber polymer C added was 50 parts by weight. The results thereof are shown in Table 1.

### (Example 3)

A fluororubber composition and a vulcanized product thereof were prepared, followed by the measurements and evaluations, in the same manner as in Example 1, except that the amount of fluororubber polymer A added was 10 parts by weight, and that the amount of fluororubber polymer C added was 90 parts by weight. The results thereof are shown in Table 1.

### (Comparative Example 1)

A fluororubber composition and a vulcanized product thereof were prepared, followed by the measurements and evaluations, in the same manner as in Example 1, except that fluororubber polymer C was not added, and that the amount of fluororubber polymer A added was 100 parts by weight. The results thereof are shown in Table 1.

### (Comparative Example 2)

A fluororubber composition and a vulcanized product thereof were prepared, followed by the measurements and evaluations, in the same manner as in Example 1, except that fluororubber polymer A was not added, and that the amount of fluororubber polymer C added was 100 parts by weight. The results thereof are shown in Table 1.

### (Comparative Example 3)

A fluororubber composition and a vulcanized product thereof were prepared, followed by the measurements and evaluations, in the same manner as in Example 1, except that 100 parts by weight of fluororubber polymer B (vinylidene fluoride (VdF)/ tetrafluoroethylene (TFE)/ perfluoro(methyl vinyl ether) (PMVE)/ perfluoroalkoxy vinyl ether (MOVE) copolymer: trade name "Tecnoflon (registered trademark) VPL45535", manufactured by Solvay) was added instead of fluororubber polymer A and fluororubber polymer C. The results thereof are shown in Table 1.

### (Comparative Example 4)

A fluororubber composition and a vulcanized product thereof were prepared, followed by the measurements and evaluations, in the same manner as in Example 1, except that 30 parts by weight of fluororubber polymer D (vinylidene fluoride (VdF)/ tetrafluoroethylene (TFE)/ perfluoro(methyl vinyl ether) (PMVE) copolymer: trade name "Tecnoflon (registered trademark) PL455", manufactured by Solvay) was added instead of fluororubber polymer C, and that the amount of fluororubber polymer A was 70 parts by weight. The results thereof are shown in Table 1.

### (Comparative Example 5)

A fluororubber composition and a vulcanized product thereof were prepared, followed by the measurements and evaluations, in the same manner as in Comparative Example 4, except that 30 parts by weight of fluororubber polymer E (vinylidene fluoride (VdF)/ tetrafluoroethylene (TFE)/ perfluoro(methyl vinyl ether) (PMVE) copolymer: trade name "DAI-EL (registered trademark) LT-304", manufactured by DAIKIN INDUSTRIES, Ltd.) was added instead of fluororubber polymer D. The results thereof are shown in Table 1.

### (Comparative Example 6)

A fluororubber composition and a vulcanized product thereof were prepared, followed by the measurements and evaluations, in the same manner as in Comparative Example 4, except that 30 parts by weight of fluororubber polymer F (vinylidene fluoride (VdF)/ tetrafluoroethylene (TFE)/ perfluoro(methyl vinyl ether)(PMVE) copolymer: trade name "Viton (registered trademark) GLT-200S", manufactured by DuPont) was added instead of fluororubber polymer D. The results thereof are shown in Table 1.

**[Table 1]**

| | | **Example** 1 | **Example 2** | **Example 3** | **Comparative Example 1** | **Comparative Example 2** | **Comparative Example 3** | **Comparative Example 4** | **Comparative Example 5** | **Comparative Example 6** |
|---|---|---|---|---|---|---|---|---|---|---|
| | **Fluororubber polymer A (Tg -40°C)** | **90** | **50** | **10** | **100** | | | **70** | **70** | **70** |
| | **Fluororubber polymer B (Tg -35°C)** | | | | | | **100** | | | |
| | **Fluororubber polymer C (Tg -30°C)** | **10** | **50** | **90** | | **100** | | | | |
| | **Fluororubber polymer D (Tg -30°C)** | | | | | | | **30** | | |
| **Fluororubber composition** | **Fluororubber polymer E (Tg -30°C)** | | | | | | | | **30** | |
| | **Fluororubber polymer F (Tg -30°C)** | | | | | | | | | **30** |
| | **Filler A** | **30** | **30** | **30** | **30** | **30** | **30** | **30** | **30** | **30** |
| | **Filler B** | **12** | **12** | **12** | **12** | **12** | **12** | **12** | **12** | **12** |
| | **Organic peroxide as crosslinking agent** | **2** | **2** | **2** | **2** | **2** | **2** | **2** | **2** | **2** |
| | **Co-crosslinking agent** | **1** | **1** | **1** | **1** | **1** | **1** | **1** | **1** | **1** |
| **Physical properties of vulcanized product** | **Glass transition temperature (Tg) [°C]** | **-39** | **-35** | **-31** | **-40** | **-30** | **-35** | **-40 \|-30** | **-40 \|-30** | **-40 \|-30** |
| | **Peak shape** | **Single** | **Single** | **Single** | **Single** | **Single** | **Single** | **Multiple** | **Multiple** | **Multiple** |
| **Cold temperature resistance** | **TR-10 [°C]** | **-39** | **-35** | **-31** | **-40** | **-30** | **-35** | **-35** | **-35** | **-35** |
| | **Evaluation** | **○** | **○** | **○** | **×** | **×** | **○** | **○** | **○** | **○** |
| **Fuel oil resistance (70°C, 168 h)** | **Swollen volume percentage [%]** | **24** | **23** | **21** | **25** | **20** | **31** | **32** | **29** | **30** |
| | **Evaluation** | **○** | **○** | **○** | **x** | **○** | **x** | **×** | **×** | **×** |
| **Alcohol resistance (70°C, 168 h)** | **Swollen volume percentage [%]** | **10** | **10** | **9** | **11** | **8** | **20** | **26** | **22** | **19** |
| | **Evaluation** | **○** | **○** | **○** | **○** | **○** | **×** | **×** | **×** | **×** |

The components shown in Table 1 above are as follows.
- Fluororubber polymer A: vinylidene fluoride (VdF)/ tetrafluoroethylene (TFE)/ perfluoro(methyl vinyl ether) (PMVE)/ perfluoroalkoxy vinyl ether (MOVE) copolymer (trade name "Tecnoflon (registered trademark) VPL85540", manufactured by Solvay)
- Fluororubber polymer B: vinylidene fluoride (VdF)/ tetrafluoroethylene (TFE)/ perfluoro(methyl vinyl ether) (PMVE)/ perfluoroalkoxy vinyl ether (MOVE) copolymer (trade name "Tecnoflon (registered trademark) VPL45535", manufactured by Solvay)
- Fluororubber polymer C: vinylidene fluoride (VdF)/ tetrafluoroethylene (TFE)/ perfluoro(methyl vinyl ether) (PMVE)/ perfluoroalkoxy vinyl ether (MOVE) copolymer (trade name "Tecnoflon (registered trademark) VPL45730", manufactured by Solvay)
- Fluororubber polymer D: vinylidene fluoride (VdF)/ tetrafluoroethylene (TFE)/ perfluoro(methyl vinyl ether) (PMVE) copolymer (trade name "Tecnoflon (registered trademark) PL455", manufactured by Solvay)
- Fluororubber polymer E: vinylidene fluoride (VdF)/ tetrafluoroethylene (TFE)/ perfluoro(methyl vinyl ether) (PMVE) copolymer (trade name "DAI-EL (registered trademark) LT-304", manufactured by DAIKIN INDUSTRIES, Ltd.)
- Fluororubber polymer F: vinylidene fluoride (VdF)/ tetrafluoroethylene (TFE)/ perfluoro(methyl vinyl ether) (PMVE) copolymer (trade name "Viton (registered trademark) GLT-200S", manufactured by DuPont)
- Filler A: medium thermal (MT) carbon black (trade name "THERMAX (registered trademark) N990", manufactured by CANCARB LIMITED)
- Filler B: bituminous coal (trade name "AUSTIN BLACK (registered trademark) 325", manufactured by Coal Fillters Inc.)
- Organic peroxide as crosslinking agent: 2,5-dimethyl-2,5-bis(tert-butylperoxy)hexane (trade name "PERHEXA (registered trademark) 25B-40", manufactured by NOF CORPORATION)
- Co-crosslinking agent: triallyl isocyanurate (trade name "TAIC (registered trademark) WH-60", manufactured by Nihon Kasei CO., LTD.)

In Table 1 above, the numerical values for the above-described components are in "parts by weight".

As clear from Table 1, the vulcanized products according to Examples 1 to 3, which were each a vulcanized product of a fluororubber composition containing two peroxide-crosslinkable fluorine-containing elastomers each containing a structural unit of perfluoroalkoxy vinyl ether, resulted in a temperature in TR-10 of -31°C to -39°C, and thus exhibited great cold temperature resistance. In addition, these vulcanized products obtained each showed a swollen volume percentage of less than 25% after immersing it in a prescribed mixed oil at 70°C for 168 hours, and also a swollen volume percentage of less than 15% after immersing it in methanol at 70°C for 168 hours, and were thus excellent in fuel oil resistance and alcohol resistance.

In contrast, as for the vulcanized products according to Comparative Examples 1 to 3, which were each a vulcanized product of a fluororubber composition containing a single peroxide-crosslinkable fluorine-containing elastomer containing a structural unit of perfluoroalkoxy vinyl ether, the followings were found. The vulcanized product according to Comparative Example 1 resulted in a temperature in TR-10 of -40°C, and thus did not exhibit desirable cold temperature resistance, and in addition, the vulcanized product showed a swollen volume percentage of 25% in the fuel oil, and thus had poor fuel oil resistance. The vulcanized product according to Comparative Example 2 resulted in a temperature in TR-10 of -30°C, and thus did not exhibit desirable cold temperature resistance similarly. The vulcanized product according to Comparative Example 3 resulted in a temperature in TR-10 of -35°C, and thus exhibited desirable cold temperature resistance; however, the vulcanized product showed a swollen volume percentage of 31% in the fuel oil and also a swollen volume percentage of 20% in methanol, and thus had poor fuel oil resistance and alcohol resistance.

The vulcanized products according to Comparative Examples 4 to 6, which were each a vulcanized product of a fluororubber composition containing one peroxide-crosslinkable fluorine-containing elastomer containing a structural unit of perfluoroalkoxy vinyl ether and one peroxide-crosslinkable fluorine-containing elastomer containing no structural unit of perfluoroalkoxy vinyl ether, resulted in a temperature in TR-10 of -35°C and thus exhibited desirable cold temperature resistance; however, the vulcanized products were poor in fuel oil resistance and alcohol resistance.

It can be seen from the above-described results that when a fluororubber composition is vulcanized and shaped that includes at least two peroxide-crosslinkable fluorine-containing elastomers each containing a structural unit of perfluoroalkoxy vinyl ether, the resulting vulcanized product exhibits great cold temperature resistance and is also excellent in both fuel oil resistance and alcohol resistance.

## Claims

1. A fluororubber composition comprising:
at least two peroxide-crosslinkable fluorine-containing elastomers each containing a structural unit of perfluoroalkoxy vinyl ether,
wherein a vulcanized product obtained by vulcanizing and shaping the fluororubber composition has a glass transition temperature (Tg), as measured according to the description, of -31°C to -39°C.

2. The fluororubber composition according to claim 1, wherein a peak shape of the glass transition temperature (Tg) as measured using a differential scanning calorimeter is single.

3. The fluororubber composition according to claim 1 or 2, comprising:
10 parts by weight or more and 100 parts by weight or less of a filler;
0.2 parts by weight or more and 5.0 parts by weight or less of an organic peroxide as a crosslinking agent; and
0.2 parts by weight or more and 5.0 parts by weight or less of a co-crosslinking agent,
per 100 parts by weight of the peroxide-crosslinkable fluorine-containing elastomers.

4. The fluororubber composition according to any one of claims 1 to 3, wherein a vulcanized product obtained by vulcanizing and shaping the fluororubber composition shows a swollen volume percentage, as measured according to the description, of less than 25% after immersing the vulcanized product in a mixed oil at 70°C for 168 hours; and
the vulcanized product shows a swollen volume percentage, as measured according to the description, of less than 15% after immersing the vulcanized product in methanol at 70°C for 168 hours.

5. A sealing material obtained by vulcanizing and shaping the fluororubber composition according to any one of claims 1 to 4.

6. The sealing material according to claim 5, wherein the sealing material is an O-ring.

## Patentansprüche

1. Fluorgummizusammensetzung, umfassend:
mindestens zwei Peroxid-quervernetzbare, fluorhaltige Elastomere, die jeweils eine Struktureinheit aus Perfluoralkoxyvinylether enthalten,
wobei ein durch Vulkanisieren und Formen der Fluorgummizusammensetzung erhaltenes vulkanisiertes Produkt eine Glasübergangstemperatur (Tg) von -31 °C bis -39 °C aufweist, gemessen gemäß der Beschreibung.

2. Fluorgummizusammensetzung nach Anspruch 1, wobei eine Peakform der Glasübergangstemperatur (Tg), gemessen unter Verwendung eines dynamischen Differenzkalorimeters, einzeln ist.

3. Fluorgummizusammensetzung nach Anspruch 1 oder 2, umfassend:
10 Gewichtsteile oder mehr und 100 Gewichtsteile oder weniger eines Füllstoffs;
0,2 Gewichtsteile oder mehr und 5,0 Gewichtsteile oder weniger eines organischen Peroxids als ein Quervernetzungsmittel; und
0,2 Gewichtsteile oder mehr und 5,0 Gewichtsteile oder weniger eines Co-Quervernetzungsmittels,
pro 100 Gewichtsteile der Peroxid-quervernetzbaren, fluorhaltigen Elastomere.

4. Fluorgummizusammensetzung nach einem der Ansprüche 1 bis 3, wobei ein durch Vulkanisieren und Formen der Fluorgummizusammensetzung erhaltenes vulkanisiertes Produkt nach Eintauchen des vulkanisierten Produkts in ein Ölgemisch bei 70 °C für 168 Stunden einen Quellungsvolumenprozentsatz, gemessen gemäß der Beschreibung, von weniger als 25 % zeigt; und
das vulkanisierte Produkt nach Eintauchen des vulkanisierten Produkts in Methanol bei 70 °C für 168 Stunden einen Quellungsvolumenprozentsatz, gemessen gemäß der Beschreibung, von weniger als 15 % zeigt.

5. Dichtungsmaterial, das durch Vulkanisieren und Formen der Fluorgummizusammensetzung nach einem der Ansprüche 1 bis 4 erhalten ist.

6. Dichtungsmaterial nach Anspruch 5, wobei das Dichtungsmaterial ein O-Ring ist.

## Revendications

1. Composition de caoutchouc fluoré comprenant :
au moins deux élastomères contenant du fluor réticulables par un peroxyde contenant chacun une unité structurale de perfluoroalcoxyvinyléther,
dans laquelle un produit vulcanisé obtenu par vulcanisation et façonnage de la composition de caoutchouc fluoré a une température de transition vitreuse (Tg), telle que mesurée selon la description, de -31 °C à -39 °C.

2. Composition de caoutchouc fluoré selon la revendication 1, dans laquelle une forme de pic de la température de transition vitreuse (Tg) telle que mesurée à l'aide d'un calorimètre différentiel à balayage est unique.

3. Composition de caoutchouc fluoré selon la revendication 1 ou 2, comprenant :
10 parties en poids ou plus et 100 parties en poids ou moins d'une charge ;
0,2 partie en poids ou plus et 5,0 parties en poids ou moins d'un peroxyde organique en tant qu'agent de réticulation ; et
0,2 partie en poids ou plus et 5,0 parties en poids ou moins d'un co-agent de réticulation,
par 100 parties en poids des élastomères contenant du fluor réticulables par un peroxyde.

4. Composition de caoutchouc fluoré selon l'une quelconque des revendications 1 à 3, dans laquelle un produit vulcanisé obtenu par vulcanisation et façonnage de la composition de caoutchouc fluoré présente un pourcentage volumique gonflé, tel que mesuré selon la description, inférieur à 25 % après immersion du produit vulcanisé dans une huile mélangée à 70 °C pendant 168 heures ; et
le produit vulcanisé présente un pourcentage volumique gonflé, tel que mesuré selon la description, inférieur à 15 % après immersion du produit vulcanisé dans du méthanol à 70 °C pendant 168 heures.

5. Matériau d'étanchéification obtenu par vulcanisation et façonnage de la composition de caoutchouc fluoré selon l'une quelconque des revendications 1 à 4.

6. Matériau d'étanchéification selon la revendication 5, dans lequel le matériau d'étanchéification est un joint torique.
